# EUROPEAN PATENT SPECIFICATION

(11) **EP 2 129 190 B1**
(45) Date of publication and mention of the grant of the patent: **11.12.2013**
(21) Application number: 08380164.7
(22) Date of filing: 30.05.2008
(51) Int. Cl.: H04W 92/12

(54) **Method, system and device for exchanging data packets in wide area cellular telephone networks**
Verfahren, System und Vorrichtung zum Austausch von Datenpaketen in großflächigen Mobiltelefonnetzen
Procédé, système et dispositif pour échanger des paquets de données dans des réseaux de téléphone cellulaire sur une zone étendue

(43) Date of publication of application: 02.12.2009
(73) Proprietor: Vodafone Group PLC, Newbury Berkshire RG14 2FN (GB); Vodafone España, S.A., 28108 Alcobendas (ES)
(72) Inventor: Romero, Francisco Dominguez,, 28108 Alcobendas (Madrid) (ES); De Pasquale, Andrea ,, 28108 Alcobendas (Madrid) (ES); Garriga Muniz, Beatriz,, 28108 Alcobendas (Madrid) (ES)
(74) Representative: Boult Wade Tennant

(56) References cited:
- WO-A-2006/078438
- US-A1- 2002 051 440
- US-A1- 2004 264 393
- US-A1- 2005 153 743
- US-B1- 6 219 347
- US-B1- 6 289 221
- US-B1- 7 110 781

## Description

### TECHNICAL FIELD OF THE INVENTION

The present invention has its application within the telecommunications sector and, especially, in the industrial area engaged in providing access networks (e.g., UTRAN in UMTS) with elements of cellular infrastructures such as base stations (e.g., Nodes-B in UMTS) for wide area cellular telephone networks (i.e. 3G networks).

More particularly, the invention described herein relates to a method and system for transmitting and receiving data packets within the access network of a wireless communications system supporting 3G or beyond 3G technologies (e.g. HSDPA, LTE, WiMax, etc.).

### BACKGROUND OF THE INVENTION

Third Generation (3G) is a generic name for technologies that support high-quality voice, high-speed data and video in wireless cellular networks. The IMT-2000 specification defined by the International Telecommunication Union (ITU) established transmission rate standards for 3G systems and defines different 3G variants based on Code Division Multiple Access (CDMA) technology: Wideband CDMA (W-CDMA), cdma2000 and Time Division CDMA (TD-CDMA). In Europe, W-CDMA/3G and TD-CDMA/3G services are called the Universal Mobile Telephony System (UMTS). TD-CDMA defined by the 3rd Generation Project Partnership (3GPP) is the air interface technique used by the UMTS-TDD standard.

TD-CDMA is a radio access technique in which the resources consist in frequency, time and code domain, and uses increments of 5MHz of spectrum, with each slice divided into 10ms frames containing fifteen time slots (1500 per second). The time slots are allocated in fixed percentage for downlink and uplink. Code Division Multiple Access is used within each time slot to multiplex streams from or to multiple transceivers.

Unlike W-CDMA which uses Frequency Division Duplex (FDD) and meaning that the up-link transmits on different frequencies than the down-link, TD-CDMA uses Time Division Duplex (TDD) allowing the up-link and down-link to share the same frequency. TD-CDMA is so designed to work in a single unpaired frequency band, allowing the operator to divide more flexibly the usage of available spectrum according to traffic patterns.

Europe-wide, several bands are provided either specifically for TD-CDMA or for similar technologies. These are 1900MHz and 1920MHz and between 2010MHz and 2025MHz. WCDMA is not specified to work in these frequencies.

UMTS, using TD-CDMA, supports up to 10.2 Mbit/s data transfer rates using the High-Speed Downlink Packet Access (HSDPA).

UTRAN (UMTS Terrestrial Radio Access Network) is a collective term which includes the Radio Network Controller (RNC), the 3G base stations (Nodes-B) and the air interface to the User Equipment (UE). More particularly, Node-B and RNC are elements that make up the UMTS radio access network and communicate through determined interfaces. Node-B handles radio channels, including the multiplexing/demultiplexing of user voice and data information. RNC is responsible for controlling and managing the multiple base stations (Nodes-B) including the utilization of radio network services.

There are four interfaces connecting the UTRAN internally or externally to other functional entities: lu, Uu, lub and lur. In particular, the Uu is an external interface, connecting the Node-B with the UE or mobile equipment (ME) that includes, for example, phones, laptops and PDAs. The lub is an internal interface connecting the RNC with the Node-B, typically consisting of multiple T1/E1 links from each Node-B aggregated to one or several ATM STM-1 (OC-3) links or one STM-4 link.

More specifically, lub constitutes the Node-B Application Part (NBAP) defined by the 3GPP specification TS 25.433. This lub interface provides UTRAN specific signalling and control for the following sample areas:
- Management of common channels, common resources, and radio links
- Configuration management, such as cell configuration management
- Measurement handling and control
- Reporting of error situations

On the other hand, Uu handles the control plane signalling between the UE and the UTRAN, constituting the Radio Resource Control (RRC) defined by the 3GPP specification TS 25.331. Some of the functions offered by this interface include the following areas:
- Broadcasting information
- Management of connections between the UE and the UTRAN, which include their establishment, maintenance, and release
- Management of the radio bearers, which include their establishment, maintenance, release, and the corresponding connection mobility
- Ciphering control
- Outer loop power control
- Message integrity protection
- UE measurement report evaluation
- Paging and notifying

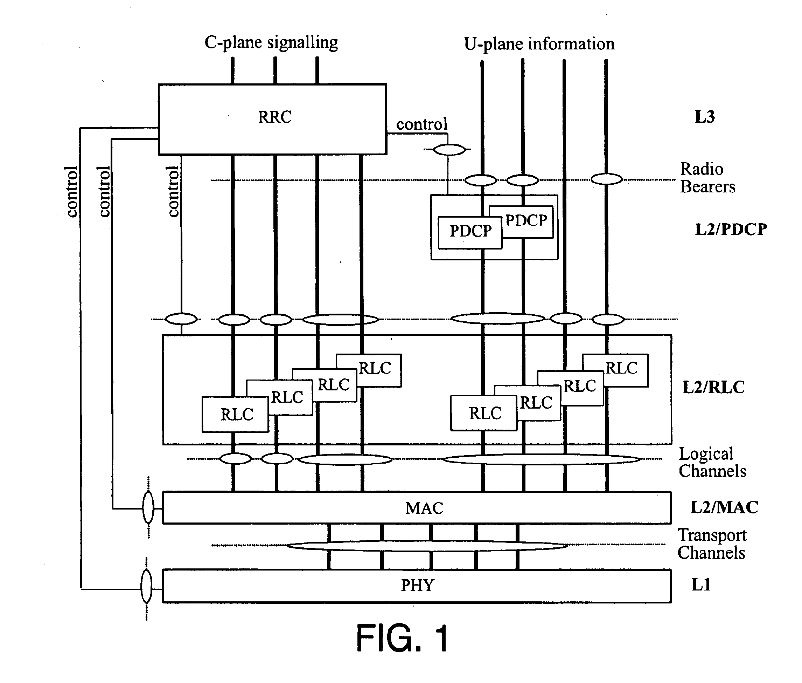

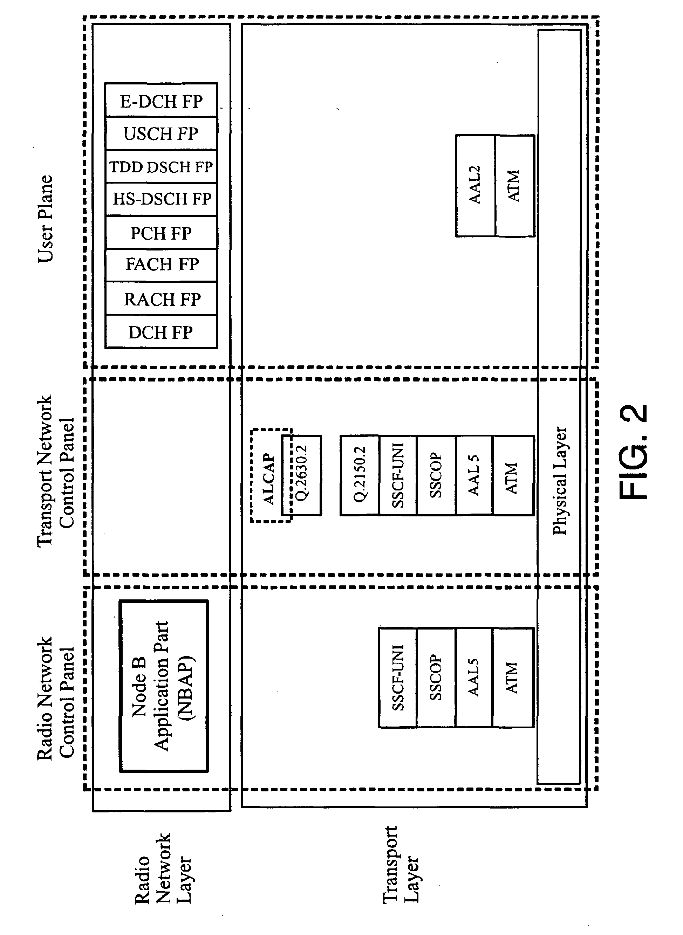

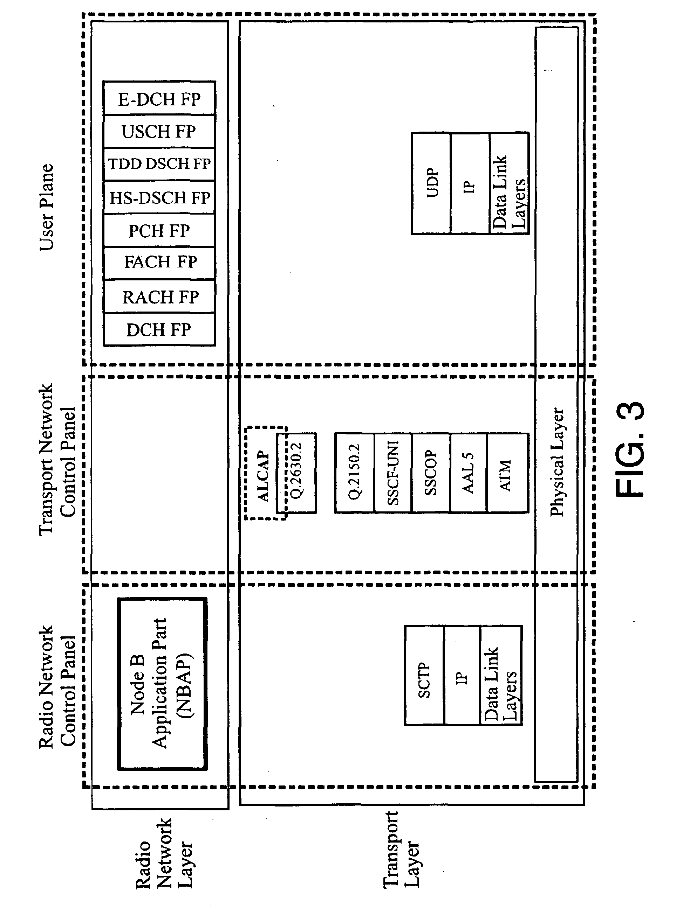

Figure 1 illustrates the RRC protocol architecture for providing communication between UE and Node-B over Uu interface. Figures 2-3 show the Node-B Application Part (NBAP) and user plane part in protocol stack which corresponds to lub interface implementation on Asynchronous Transfer Mode (ATM) and Internet Protocol (IP) respectively. 3GPP specifications involved are:
- 3GPP TS 25.321: "MAC Protocol Specification".
- 3GPP TS 25.322: "RLC Protocol Specification".
- 3GPP TS 25.302: "Services provided by the Physical Layer".
- 3GPP TS 25.301: "Radio Interface Protocol Architecture".
   Commonly, all the interfaces in the UTRAN are implemented using ATM or IP, except Uu interface which ordinary uses a W-CDMA air interface technology but also can use any of the radio technologies specified by the 3GPP, including TD-CDMA air interface (standardized in UMTS by the 3GPP as UTRA TDD-HCR)

It is worthy to note that W-CDMA is commercially used for the Uu interface in most of the countries and instead the spectrum allocated to TD-CDMA is not in use.

Current lub implementations are based on ATM/IP and there are different possibilities for the physical layer: optical fibre, copper line, microwave radio links implementing E1, Ethernet physical layer, ADSL physical layer, etc.

An example of integration of different transmission technologies in wireless communication systems is disclosed in US 2004/264393, which describes a TDD-FDD selector used by a RNC in order to determine which technology is optimal for a received request of radio resource allocation, i.e., whether it is preferable to assign TDD resouces or FDD resources. The selector is always in a RNC where all the requests are received and evaluated. In a communication system, for example, in which TDD is the dominat technology, this allows eliminating the need for a FDD RNC to support lu protocols because just a single lu connection between the TDD RNC and the core network is needed and allows quick deployment of FDD networks within wider TDD network (and vice versa).

Data packets are transmitted across the Uu, lub and lu(PS) interfaces. WO 2006/078438 teaches a modification of the protocol stack of the RNC in order to allow the RNC to forward the compressed data packets coming from the Uu and lub interfaces over an luPS communication link to the core network, which in turn can descompress the data packets. Thus, the Packet Data Compression functionality is moved from the access network to the core network. Note that luPS and lub communication links can be wireline but also wireless. Multiple Nodes B can be coupled to an UE via (always wireless) Uu communication link and a plurality of Nodes B can be coupled to a RNC via (possibly wireless) lub communication link.

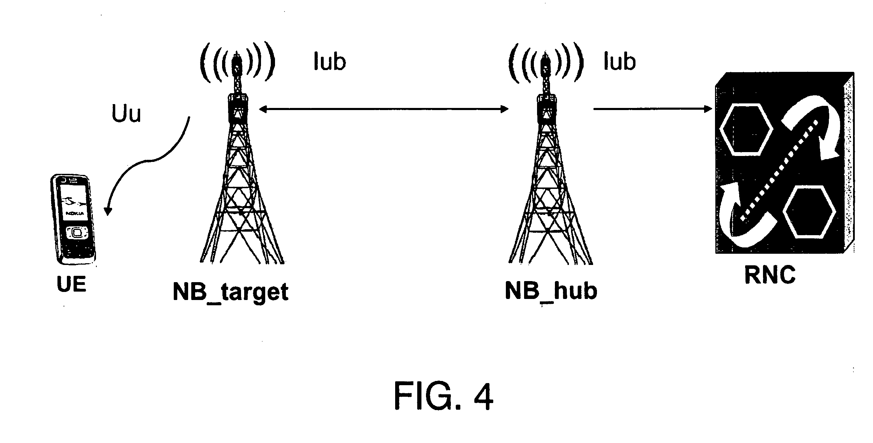

A so-called Node-B hub (NB-HUB) can be used in the middle of the connection over lub between the Node-B (NB-Target) connected to the User Equipment (UE) and the RNC, as shown in Figure 4.

In clusters where Nodes-B have difficulties to add transmission resources, the Node-B target can connect with a Node-B with high lub bandwidth: the node-B Hub.

Coupled with the high-speed experiences that a 3G technology such as HSDPA provides, there is a dramatic increase in traffic volume over the lub. Compared with the R99/R4 network, HSDPA poses higher requirements on transmission network bandwidth even more as offered peak rates increase.

In order to mitigate the lub limitation in current networks a new mechanism to manage the traffic is presented.

### SUMMARY OF THE INVENTION

The present invention serves to solve the aforesaid problem by including a layered protocol structure based on TD-CDMA protocol stack as a physical layer of lub interface. Thus, a first node with lub resources limitations (e.g., a Node-B target connected to the UE) is allowed to use such new physical layer (Uu interface) included in lub interface in order to connect and send data information to a second node (e.g., a Node-B hub connected to the RNC) which is already provided with enough transmission resources.

More concretely, the exchanging of data packets between the first node and the second node, in both transmission directions, over the lub interface proposed here, uses a Radio Link Control (RLC) protocol and a Media Access Control (MAC) protocol over a radio channel of a TD-CDMA physical layer.

There are 2 types of TD-CDMA options: 3.84 and 7.68 Megachips per second (Mcps). They are able to work with 5 and 10 MHz respectively spectrum allocation, whilst WCDMA operates over 2x5 MHz (5 MHz for Uplink and 5 MHz for Downlink).

The radio interface used for the invention is layered into three protocol layers: the physical layer, the data link layer and the network layer. In turn, the data link layer is split into following sublayers: Medium Access Control (MAC), Radio Link Control (RLC) and Packet Data Convergence Protocol (PDCP). The (RLC) protocol layer as well as the network layer is divided into Control and User planes. PDCP, the protocol which uses the service provided by the lower layer RLC to perform header compression/decompression of IP data streams (e.g., TCP/IP and RTP/UDP/IP headers), transfer of user data and maintenance of sequence numbers for Radio Bearers, exists in the User plane only.

The MAC layer provides data transfer services on logical channels. A set of logical channel types is defined by which type of information is transferred, being generally classified into two groups:
- control channel (for the transfer of Control plane information), and in this group two kind of logical channels can be distinguished:
   ■ CCCH: Common Control Channel (for transmission setup between a Node-B hub and a Node-B target)
   ■ DCCH: Dedicated Control Channel (for transmission of dedicated control information between the Node-B hub and the Node-B target);
- traffic channel (for the transfer of User plane information) which deals with a Dedicated Traffic Channel (DTCH), dedicated to one Node-B target.

Logical channels are mapped onto transport channels. The transport channels can also be classified into two groups: common transport channels and dedicated transport channels.

Common transport channel used for this invention are:
- RACH: Random Access Channel (for the setup of the channel when switching on the system of transporting the lub data)
- FACH: Forward Access Channel (for the first setup of the lub transmission system)
- USCH - Uplink Shared Channel is an uplink transport channel shared by several UEs carrying dedicated control or traffic data.
- HS-DSCH: High Speed Downlink Shared Channel (for all the data transmission, constituting a downlink channel shared between different Node-B targets by allocation of individual codes, from a common pool of codes assigned for the channel).

Dedicated transport channel types are:
- DCH: Dedicated Channel (dedicated to one Node B target for carrying the signalling information to control the HS-DSCH channel); and,
- E-DCH: Enhanced Dedicated Channel (dedicated to one Node B target for the transport in uplink only of all the data of the lub transmission).

The functions of MAC include the mapping of logical channel(s) onto the appropriate transport channel(s) as follows:
- In Uplink (transmission path from the UE), the following connections between logical channels and transport channels are allowed: CCCH mapped to RACH, DCCH mapped to DCH, DTCH mapped to E-DCH, and DTCH mapped to USCH.
- In Downlink (transmission path to the UE), the following connections between logical channels and transport channels are allowed: DCCH mapped to FACH, DCCH mapped to DCH and DTCH mapped to HS-DSCH.

The functions of the physical layer include the mapping of transport channel(s) onto physical channel(s). Physical channels are defined by a specific carrier frequency, scrambling code, channelization code (optional), time start and stop (giving a duration) and, on the uplink, relative phase (0 or π/2).

The DCH transport channels are coded and multiplexed, and the resulting data stream is mapped sequentially (first-in-first-mapped) directly to any of the following physical channels:
- DPCH: Dedicated Physical Channel (uplink/downlink),

For the RACH and FACH transport channels, the coded and interleaved bits are sequentially mapped to the following physical channels respectively:
- PRACH: Physical Random Access Channel (for carrying the RACH),
- S-CCPCH: Secondary Common Control Physical Channel (for carrying the FACH).

The E-DCH transport channel is coded and the resulting data stream is mapped sequentially (first-in-first-mapped) directly to the following physical channels:
- E-DCH Physical Uplink Channel (E-PUCH)
- E-DCH Random Access Uplink Control Channel (E-RUCCH)
- E-AGCH: E-DCH Absolute Grant Channel (downlink),
- E-HICH: E-DCH Hybrid ARQ Indicator Channel (downlink).

Also the HS-DSCH transport channel is coded and the resulting data stream is mapped sequentially (first-in-first-mapped) directly to the following physical channels:
- (HS-SICH) Shared Information Channel for HS-DSCH
- HS-PDSCH: High Speed Downlink Shared Channel (downlink),
- HS-SCCH: HS-DSCH-related Shared Control Channel (downlink),

The USCH - Uplink Shared Channel is mapped into the physical channel:
- Physical Uplink Shared Channel (PUSCH).

Apart from these channels, there are others channels needed depending on the TDD mode used:
- For the 3.84 Mcps: The synchronisation channel (SCH) and the physical node B synchronisation channel (PNBSCH).
- For the 7.68 Mcps: The synchronisation channel (SCH).

The logical and physical channels used in the lub interface as this invention proposes can be any of the standardised in 3GPP. The most optimal is the HS-DSCH but another channel, from the above defined, can be used.

An aspect of the invention is a method for exchanging data packets within the access network of a wide area cellular telephone network, where in at least a first node and at least a second node (for example, two Nodes-B: a Node-B target and a Node-B hub) are identified. The exchanging of data packets between the, at least one, first node and the, at least one, second node uses a Radio Link Control (RLC) protocol and a Media Access Control (MAC) protocol over a channel of the TD-CDMA physical layer.

By using TD-CDMA for lub transmission, an advantage is the flexibly and dynamically split of the available lub transmission bandwidth between Uplink and Downlink, so that different ratio of capacity can be allocated between the two directions (Uplink and Downlink); in contrast to W-CDMA, wherein 5 MHz are allocated to each direction and hence there is a fixed ratio of 50 % between Downlink and Uplink..

For exchanging data packets over the proposed lub, the channel used in the TD-CDMA physical layer is configured to be always opened. The transmitting node (located at the first or second depending on the architecture scenario) is configured to listen to said pre-defined channel all the time. The configuration to setup the channel in an always-open mode involves exchanging a series of messages between the first and second nodes:
- the transmitting node sends a lub TRANSPORT REQUEST message to the receiving node;
- the receiving node sends a reply for the lub TRANSPORT REQUEST message to the transmitting node, accepting the establishment of the connection between the two nodes over lub by sending a lub TRANSPORT SETUP message;
- the transmitting node acknowledge the establishment of said lub connection with the receiving node by sending a lub TRANSPORT SETUP COMPLETE message to said receiving node.

Note that the invention can be applied to exchange data packets through lub, preferably over a HS-DSCH channel, in downlink (the transmission path to the user or mobile equipment) as in uplink (the transmission path from the user or mobile equipment).

Key characteristics of HS-DSCH usage with a TD-CDMA physical layer are the following:

| Topic | Channel utilization |
|---|---|
| Uplink | Uses HS-SICH (Shared Information Channel ) to send Ack/Nack & CQ I to Node-B |
| Downlink | It consists of associated Dedicated Physical Channels and shared Control Channels(HS-SCCHs) |
| Spreading Factor | HS-DSCH uses fixed SF =16. |
| Receiving side | Can Use Joint Detection |
| Transmit Time Interval | It uses 10 ms |
| Timing Relationships | It needs minimum 5 slots between HS- SCCH and start of Corresponding HS-DSCH TTI |
| Closed Loop Power | Calculates Closed loop Power Control on HS-SCCH by estimating BLER using HCSN (HS-SCCH Cyclic Sequence Number) |
| Measurement Report of CQI | It is associated with each HS-SCCH transmission |
| Information On Downlink | TFRI carries Resource Allocation (21- Bit), Modulation (1- Bit) and Transport block size(9- Bit) |

The proposed exchanging of data packets over lub interface uses any of the frequency bands specified for the usage of the TD-CDMA physical layer; frequency bands for usage with TD-CDMA are specified in 3GPP TS 25.105 and 25.102

With regards to the network layer of the described lub, an ATM or an IP based transport network layer can be used; data packets through this lub can be normally identified by an ATM address or a IP address.

Depending on the lub transport architecture of the access network, more than one node-B target can be used. Every node-B target has to be identified in a sector of the node-B hub and with a different identity. Using the TD-CDMA layer 1 physical channel permanently opened to transport the lub data from the node-B hub to the plurality of nodes-B target, the scheduler of said node-B hub chooses which node-B target is to be served in every transmission time interval.

Another aspect of the invention deals with a system for exchanging data packets in wide area cellular telephone networks, the wide area cellular telephone network having an access network to connect to at least UE through Uu interface using at least one frequency band. This system comprises at least a first node and at least a second node capable of connecting each other through lub interface; for example, there are at least two 3G base stations: a node-B hub and one or more nodes-B target. The exchanging of data packets uses a protocol stack, comprising at least a transport network layer and at least a physical layer. The proposal is that the, at least one, first node and the, at least one, second node of the system comprise a protocol stack forming lub interface by a RLC protocol layer and a MAC protocol layer over a TD-CDMA physical layer.

This TD-CDMA physical layer in lub interface is configured to use a channel permanently opened, in uplink and/or downlink. Any of the first or second nodes is capable of connecting directly to a radio network controller (RNC) and a plurality of RNCs can be connected to different nodes-B hub and nodes-B target forming a 3G meshed network.

Another further aspect of the invention is related to a device which refers to a card adapted to be incorporated in a node (for example, a Node-B) belonging to the access network of a wide area cellular telephone networks, the card comprising the protocol stack that implements the method described before. This device or card comprises a processor or controller implementing a TD-CDMA physical layer, a MAC protocol layer and an RLC protocol layer over the TD-CDMA physical layer. This card can be easily connected to the ATM or IP terminating points of a Node-B (node-B target or hub) that carry the information (to the UE or the RNC in each case).

The RNC has nothing to be modified for being used in the context of invention.

A last aspect of the invention consists of a third generation (3G) base station (Node-B) which integrates the protocol stack that implements the method described before, comprising a layer 1 which is a TD-CDMA physical layer and a layer 2 having RLC protocol and MAC protocol sublayers. This protocol stack constitutes a lub interface with another Node-B. The protocol stack can be implemented in the defined Node-B or, alternatively, said Node-B can incorporate a card as above described, comprising a TD-CDMA physical layer, a MAC protocol layer and RLC protocol layer.

The 3G base station proposed here can be a node-B Target capable of connecting to at least one user equipment or a node-B Hub capable of connecting to a RNC. This 3G base station comprises a MAC protocol layer and a RLC protocol layer over the TD-CDMA physical layer, which uses a frequency different from the frequency used in the Uu interface, for exchanging data packets through lub interface. The TD-CDMA physical layer in lub interface is configured to use a channel permanently opened, which can be:
- a HS-DSCH transport channel in a transmission path from the user equipment and a E-DCH transport channel in a transmission path to the user equipment, or vice versa:

- a HS-DSCH transport channel in a transmission path to the user equipment and a E-DCH transport channel in a transmission path from the user equipment.

The 3G base station further comprises a transport network layer over the Radio Link Control (RLC) protocol layer, Media Access Control (MAC) protocol layer and TD-CDMA physical layer; and the transport network layer is selected from an ATM based transport network layer and an IP based transport network layer on top of the commented protocols layers. The 3G base station further comprises a physical layer selected from optical fibre, copper wire and microwave radio.

The benefits of the present invention are translated to reducing the traffic load and costs in transmission.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a layered protocol structure defined in the prior art for the implementation of Uu interface.
Figure 2 shows a layered protocol structure defined in the prior art for the implementation of lub interface based on ATM.
Figure 3 shows a layered protocol structure defined in the prior art for the implementation of lub interface based on IP.
Figure 4 shows a part of a wireless communications system, as known in the prior art, which includes the elements of a cellular infrastructure, mobile terminal of the user, bases stations and remote controller of the network, related with the object of the invention.
Figure 5 shows a schematic representation of the protocol stacks for the nodes which are a part related to the present invention, according to a preferred implementation.
Figure 6 shows a diagram of messages for radio bearer establishment using HS-DSCH in downlink, according to a possible embodiment of the invention.
Figure 7 shows a diagram of messages for radio bearer establishment using HS-DSCH in uplink, according to another possible embodiment of the invention.
Figure 8 shows a diagram of messages for transport connection establishment from a Node-B target to a Node-B hub, according to a possible embodiment of the invention.
Figure 9. shows a diagram of messages for transport connection establishment from a Node-B hub to a Node-B target, according to another possible embodiment of the invention.
Figure 10 shows a block diagram of the architecture of a possible scenario for application of the invention, using HS-DSCH to lub transport in downlink and E-DCH in uplink.
Figure 11 shows a block diagram of the architecture of another possible scenario for application of the invention, using HS-DSCH to lub transport in uplink and E-DCH in downlink.
Figure 12 shows a block diagram of the architecture of a possible scenario for application of the invention, using HS-DSCH to lub transport in uplink and ADSL in downlink.
Figure 13 shows a block diagram of the architecture of a further possible scenario for application of the invention, using multiple physical layers for lub transport connection.
Figure 14 shows a block diagram of the architecture of a yet further possible scenario for application of the invention, using multiple Node-B targets.
Figure 15 shows a block diagram of the architecture of another possible scenario for application of the invention, in 3G meshed networks.

### DETAILED DESCRIPTION OF THE INVENTION

The present invention proposes a method and elements of a system, which in various preferred embodiments may be incorporated in wide area cellular telephone networks operating in accordance with the 3GPP standards.

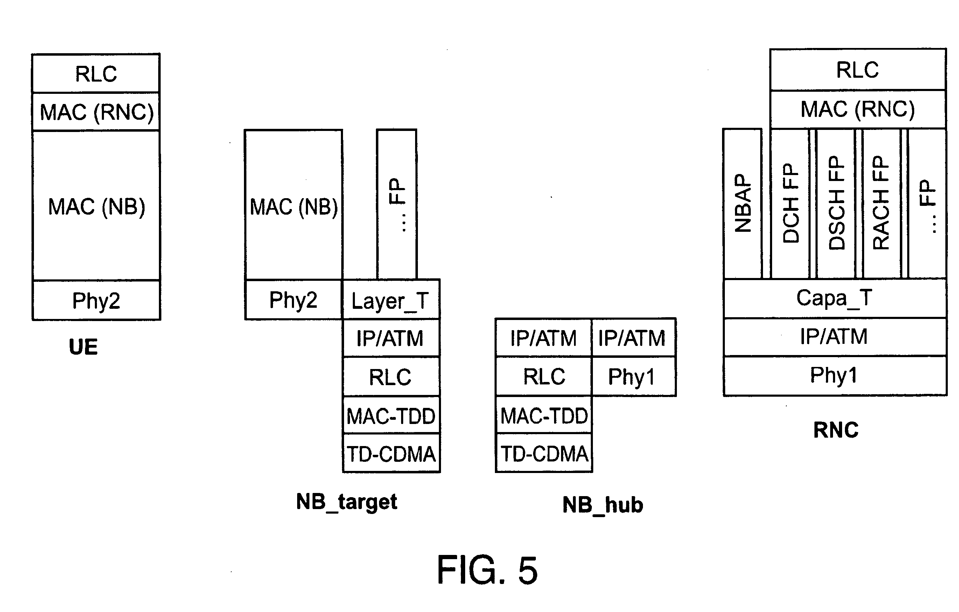

Figure 5 illustrates a user equipment (UE) and part of the access network of a wide area cellular telephone network including the elements of the system which determines an aspect the invention. Aside from the invention, the User Equipment (UE) and the radio network controller (RNC) shown in the figure are conventional and well known, and so these two elements are not described in detail here. The elements of interest are the 3G base stations: a hub node-B (NB_hub) associated to one radio network controller (RNC) through land lines or fixed radio links and a target node-B (NB_target) in communication with the User Equipment (UE) through a standardised radio interface defined as Uu interface with a physical layer (Phy2). This physical layer (Phy2) of the Uu interface can be any of the ones defined by the 3GPP: W-CDMA, TD-CDMA, TD-SCDMA or CDMA2000. The radio network controller (RNC) connects with the hub node-B (NB_hub) through a physical layer (Phy1) which can be E1, STM-1, ETHERNET, etc. Over the physical layer (Phy1) between the hub node-B (NB_hub) and the radio network controller (RNC), there is a transport network layer, which can be based on the Asynchronous Transfer Mode (ATM) or Internet Protocol (IP), over which a transport layer (Layer_T) is supported providing ATM Adaptation Layers or other transport layer protocols such as TCP, UDP, RTP, SCTP. 3G protocols including the Node-B Application Part (NBAP) and the different Frame Protocols (FP) are implemented over the transport layer (Layer_T).

In order to transmit/receive the downlink and uplink data signals, the 3G base stations (NB_hub, NB_target) incorporate respective transceivers that contain a transmitter and a receiver. The hub node-B (NB_hub) includes in the protocol stack a layer one or physical layer (Phy1) to communicate with the radio network controller (RNC); whilst the target node-B (NB_target) includes the physical layer (Phy2) of the Uu interface to transmit/receive to/from the UE, In order to exchange data packets, in downlink and uplink, between these two 3G base stations (NB_hub, NB_target), another protocol stack is proposed including an additional physical layer using TD-CDMA which uses a specific radio frequency. Over this TD-CDMA physical layer, a Radio Link Control (RLC) protocol and a Media Access Control (MAC) part for TDD protocol are included in both 3G base stations (NB_hub, NB_target).

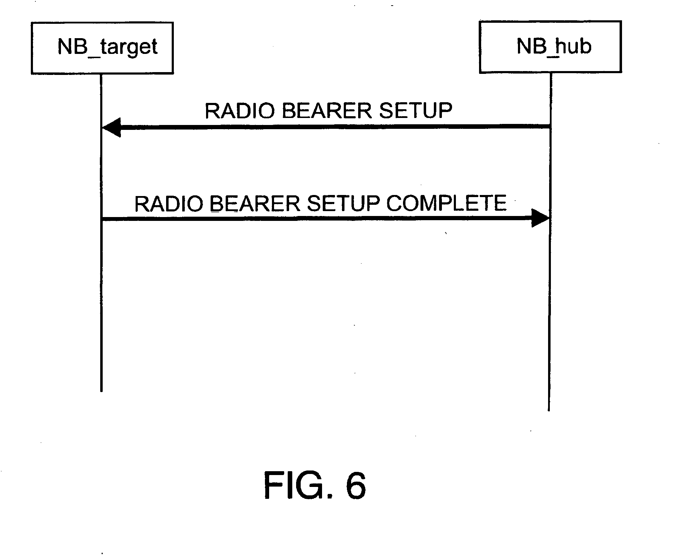

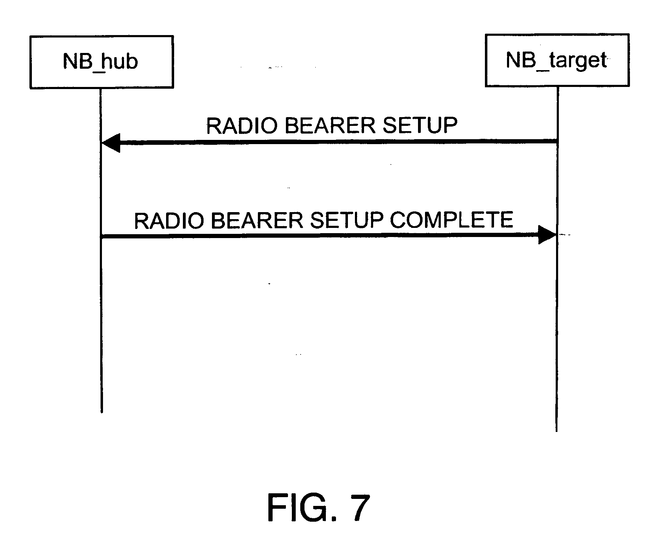

In a preferred embodiment of the invention, the TD-CDMA physical layer between the hub node-B (NB_hub) and the target node-B (NB_target) uses HS-DSCH from the hub node-B (NB_hub) to the target node-B (NB_target), while E-DCH is used from the target node-B (NB_target) to the hub node-B (NB_hub), as shown in Figure 6. The RADIO BEARER SETUP message is like in 3GPP specifications. The contrary option is also possible: with HS-DSCH used from the target node-B (NB_target) to the hub node-B (NB_hub) and E-DCH used from the hub node-B (NB_hub) to the target node-B (NB_target), as described in Figure 7.

The transport channel used by the TD-CDMA physical layer, preferably HS-DSCH, is configured to be open all the time, so a configuration has to be done, to define the scrambling code and identity, and all the parameters of the channel to communicate between the hub node-B (NB_hub) and the User Equipment (UE) associated to the target node-B (NB_target).

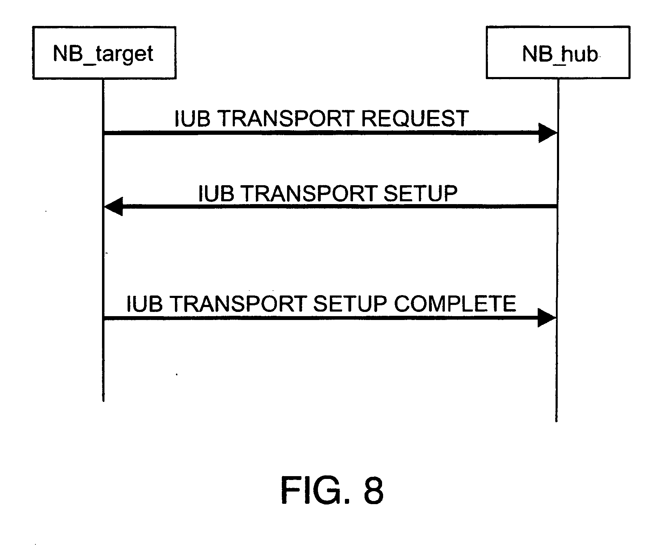

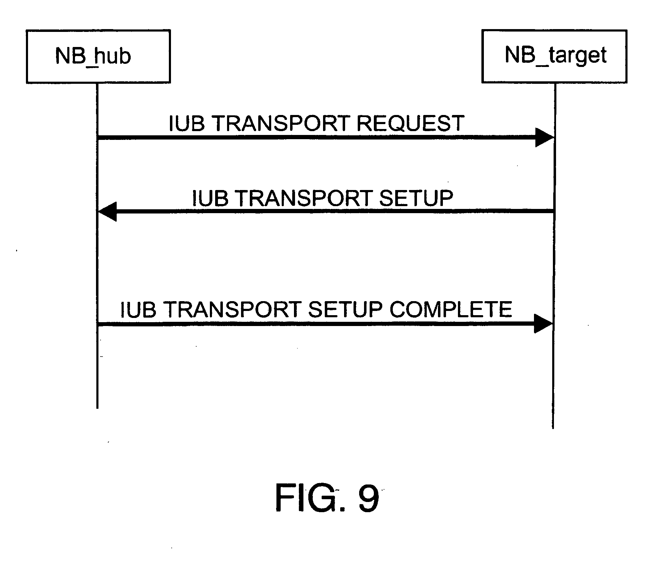

The establishment of the Signalling Radio Bearer when switching on the system after the synchronisation is described in Figure 8, after which the establishment of the Radio Bearer HS-DSCH and E-DCH is carried out as illustrated in the previous Figures 6-7. Figure 8 shows the exchanging of messages to request a lub transport connection establishment from the target node-B (NB_target) to the hub node-B (NB_hub) and said hub node-B (NB_hub) accepting the establishment of the lub connection. In case of more bandwidth, in uplink, is required from the target node-B (NB_target) to the hub node-B (NB_hub), then it is possible to establish the connection on the contrary, as shown in Figure 9. In this way, having the target node-B (NB_target) accepted the establishment of the lub transport connection, said target node-B (NB_target) has to transmit all the physical channels needed to synchronise with the hub node-B (NB_hub).

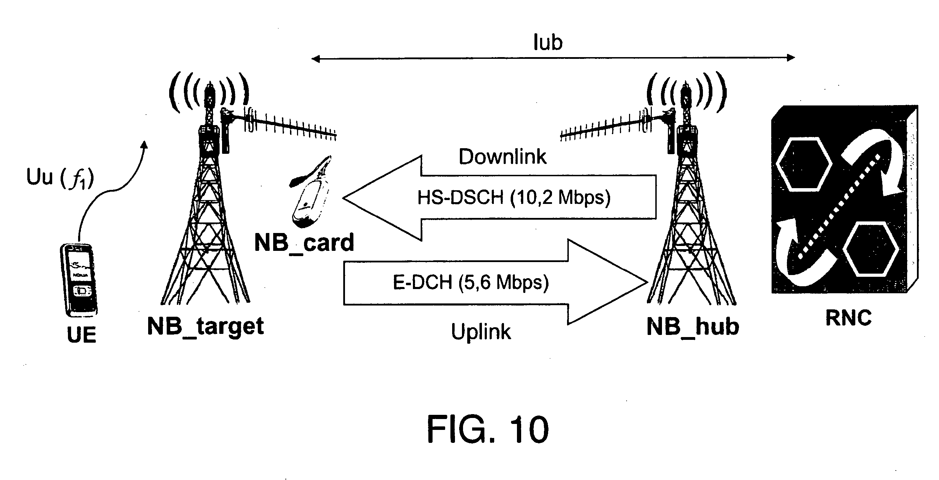

Figure 10 illustrates an application of the invention, having a node-B card (NB_card) with the protocol layers implementing the proposed lub interface: the TD-CDMA physical layer, Media Access Control (MAC) protocol layer for TDD and Radio Link Control (RLC) protocol layer. This node-B card (NB_card) is connected to the ATM/IP points of the target node-B (NB_target) in order to exchange the lub data with the hub node-B (NB_hub). The hub node-B (NB_hub) in turn carries the lub data from/to the radio network controller (RNC) through an E1 or Ethernet connection configured at the standardised lub physical layer (Phy1). The user mobile terminal or User Equipment (UE) communicates with the target node-B (NB_target) through the standardised Uu interface using an allocated W-CDMA frequency (f1).

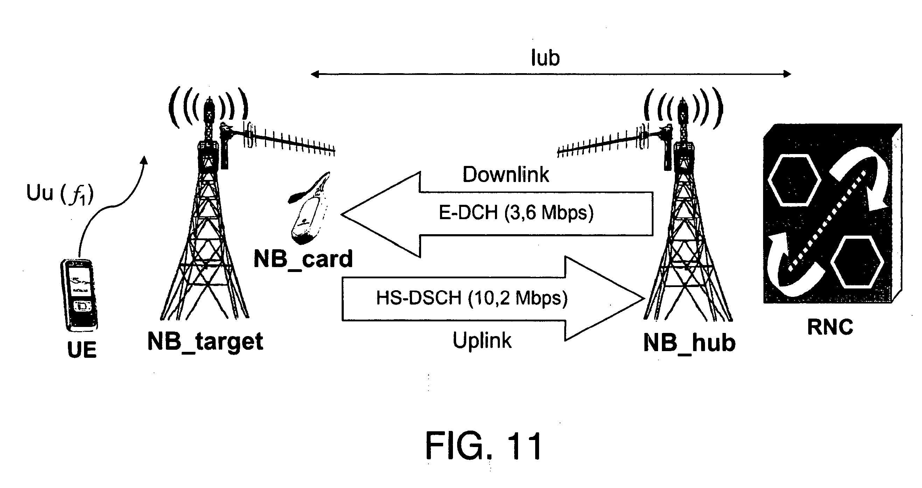

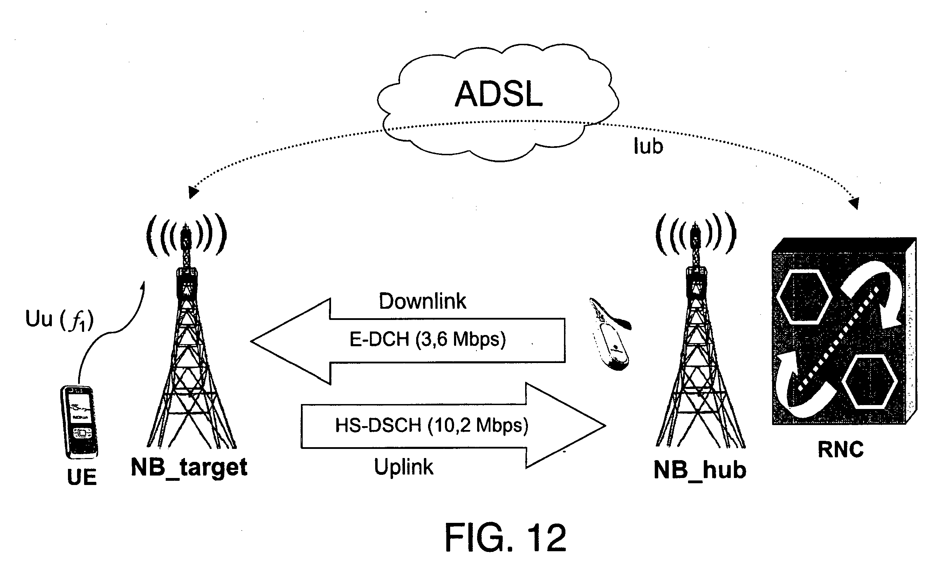

The same concept can be used to transport in the uplink over the HS-DSCH transport channel of up to 10.2 Mbps, as represented in Figure 11. This allows the uplink to improve bit rate as for example in case of using ADSL. Figure 12 represents an example of carrying the lub data from the radio network controller (RNC) to the target node-B (NB_target) in a conventional way, by using Asymmetric Digital Subscriber Line (ADSL) only for downlink, while the uplink transmission is carried with high capacity by TD-CDMA physical layer HS-DCSH transport channel.

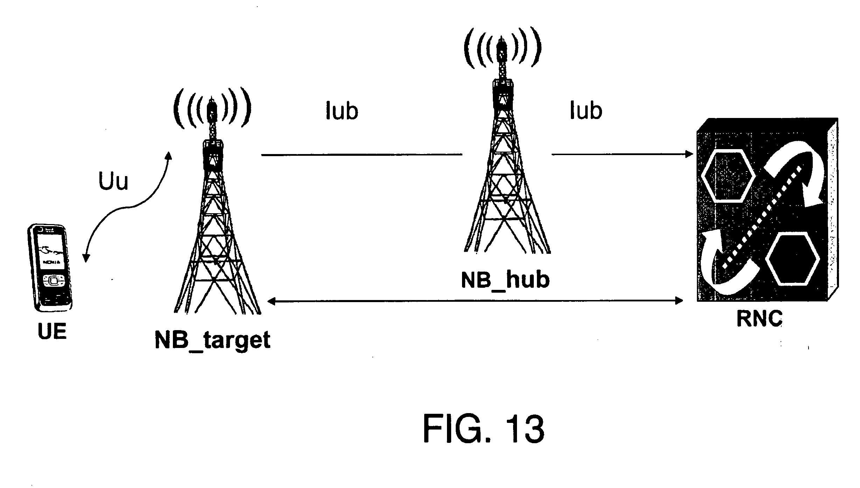

In the above illustrated examples just one TD-CDMA frequency, f3, is used by the TD-CDMA physical layer of lub, but another possible configuration allows multiple physical layers to be used for lub. This case is represented in Figure 13. In this case, the radio network controller (RNC) has mechanisms to choose the optimum path to transport the traffic: Inverse multiplexing for ATM - IMA group- can be used to optimise the resources or, also, dual path can be applied between the TD-CDMA transmission and the normal direct link.

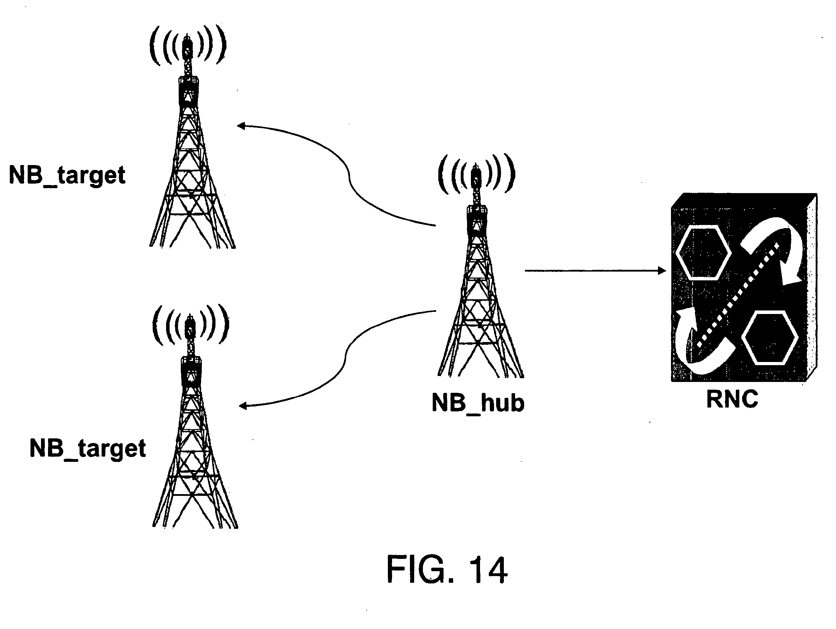

Figure 14 shows a further possible architecture of an application scenario, using HS-DSCH to transport the lub data to more than one target node-B (NB_target₁,..., NB_targetₙ), having a scheduler in the hub node-B (NB_hub) configured to choose from the plurality of n node-B targets the node which lub transport connection is established to.

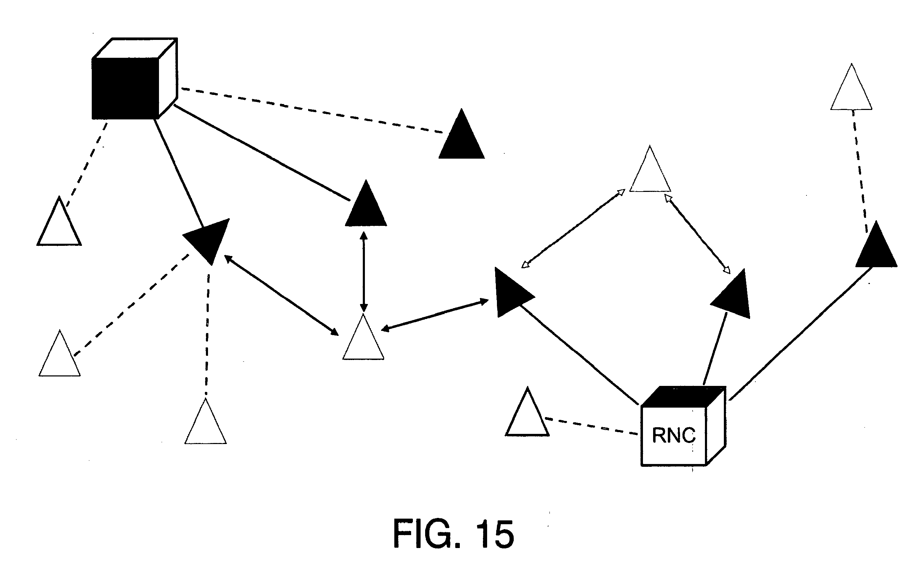

One of the complementary applications is the use of meshed networks, represented in Figure 15, comprising more than one radio network controllers (RNC), depicted as cubic nodes. Each radio network controller (RNC) can be connected conventionally, by a standardised lub interface, to a normal Node-B, drawn as white triangles. Also, there are one or more Nodes-B acting as a hub, black triangles in Figure 15, connected to the radio network controller (RNC) by a high lub bandwidth interface, depicted as a solid black line, and each hub connected to one or more Nodes-B acting as targets, grey triangles. With TD-CDMA physical layer in lub interface, indicated by the double arrowed line, one Node-B can be served with more than one link and then it is possible to carry the traffic through the optimal route within a meshed network implementation. Double arrowed lines in black indicate possible routes in the meshed network from different radio network controllers (RNC). Double arrowed lines in grey indicate possible routes in the meshed network from the same radio network controller (RNC).

The terms in which this specification has been worded are always to be taken in the broadest sense and not restrictively.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. Method for exchanging data packets in wide area cellular telephone networks, the wide area cellular telephone network having an access network to connect to at least one user equipment (UE) through Uu interface using at least one frequency band, comprising:
- identifying at least a first node and at least a second node of the access network, capable of connecting each other, the first node being a hub node-B (NB_hub) capable of connecting to a radio network controller (RNC) for exchanging lub data and the second node being a target node-B (NB_target) capable of connecting to at least one user equipment (UE);
**characterised in that** the method further comprises:
- exchanging, using a Radio Link Control (RLC) protocol and a Media Access Control (MAC) protocol over a channel of the TD-CDMA physical layer, at least one data packet from the first node to the second node, the at least one data packet being lub data.

2. Method according to claim 1, further comprising a step of configuring the channel of the TD-CDMA physical layer to be always opened.

3. Method according to any previous claim, wherein the step of exchanging the data packet uses a HS-DSCH transport channel in a transmission path from the, at least one user equipment (UE).

4. Method according to claim 3, wherein the step of exchanging the data packet uses an E-DCH transport channel in a transmission path to the, at least one, user equipment (UE).

5. Method according to any previous claim, wherein the step of exchanging the data packet uses a HS-DSCH transport channel in a transmission path to the, at least one, user equipment (UE).

6. Method according to claim 5, wherein the step of exchanging the data packet uses an E-DCH transport channel in a transmission path from the, at least one, user equipment (UE).

7. Method according to any previous claim, wherein the step of exchanging the data packet uses a frequency of the TD-CDMA physical layer which is different from the at least one frequency band used at Uu interface.

8. System for exchanging data packets in wide area cellular telephone networks, the wide area cellular telephone network having an access network to connect to at least one user equipment (UE) through Uu interface using at least one frequency band, the system comprising at least a first node and at least a second node which are 3G base stations capable of connecting each other, the first node being a hub node-B (NB_hub) capable of connecting to a radio network controller (RNC) for exchanging lub data and the second node being a target node-B (NB_target) capable of connecting to at least one user equipment (UE), **characterized in that** both 3G base stations are capable of exchanging data packets which are lub data using a protocol stack which comprises at least a transport network layer and at least a physical layer, wherein both the, at least one, first node and the, at least one, second node comprise a TD-CDMA physical layer, Media Access Control (MAC) protocol layer and Radio Link Control (RLC) protocol over the TD-CDMA physical layer.

9. System according to claim 8, wherein the TD-CDMA physical layer uses a frequency band different from the at least one frequency band used at the Uu interface.

10. System according to any of claims 8 or 9, wherein both the, at least one, first node and the, at least one, second node further comprise a physical layer selected from optical fibre, copper wire and microwave radio.

11. System according to any of claims 8 to 10, wherein the TD-CDMA physical layer is configured to use a channel permanently opened.

12. System according to claim 11, wherein the TD-CDMA physical layer uses a HS-DSCH transport channel in a transmission path from the, at least one, user equipment (UE).

13. System according to claim 12, wherein the TD-CDMA physical layer uses a E-DCH transport channel in a transmission path to the, at least one, user equipment (UE).

14. System according to any of claims 8 to 11, wherein the TD-CDMA physical layer uses a HS-DSCH transport channel in a transmission path to the, at least one, user equipment (UE).

15. System according to claim 14, wherein the TD-CDMA physical layer uses a E-DCH transport channel in a transmission path from the, at least one, user equipment (UE).

16. System according to any of claims 8 to 15, wherein the transport network layer is selected from a ATM based transport network layer and a IP based transport network layer.

17. System according to any of claims 8 to 16, wherein the target node-B (NB_target) is capable of connecting directly to the radio network controller (RNC).

18. System according to any of claims 6 to 17, further comprising a plurality of radio network controllers (RNC) connected to the 3G base stations forming a 3G meshed network.

19. Device for exchanging data packets in wide area cellular telephone networks, incorporated in a 3G base station, comprising a processor which implements a TD-CDMA physical layer, Media Access Control (MAC) protocol layer and Radio Link Control (RLC) protocol layer over the TD-CDMA physical layer and being configured to implement the method defined according to any of claims 1 to 8.

20. Device according to claim 19, **characterized in that** the device is connected to an ATM port of the 3G base station.

21. Device according to claim 19, **characterized in that** the device is connected to an IP port of the 3G base station.

## Patentansprüche

1. Verfahren zum Austausch von Datenpaketen in weiträumigen zellularen Telefonnetzen, wobei das weiträumige zellulare Telefonnetz ein Zugangsnetz aufweist, um durch eine Uu-Schnittstelle zu mindestens einer Benutzervorrichtung (UE) eine Verbindung herzustellen, wobei die Uu-Schnittstelle mindestens ein Frequenzband verwendet, wobei das Verfahren Folgendes umfasst:
- Identifizieren mindestens eines ersten Knotens und mindestens eines zweiten Knotens des Zugangsnetzes, die miteinander verbunden werden können, wobei der erste Knoten ein Hubknoten-B (NB_hub) ist, der mit einem Funknetz-Controller (Radio Network Controller - RNC) eine Verbindung herstellen kann, um Lub-Daten auszutauschen, und der zweite Knoten ein Zielknoten-B (NB_target) ist, der mit mindestens einer Benutzerausrüstung (User Equipment - UE) eine Verbindung herstellen kann;
**dadurch gekennzeichnet, dass** das Verfahren ferner Folgendes umfasst:
- Austausch von mindestens einem Datenpaket vom ersten Knoten zum zweiten Knoten, wobei das mindestens eine Datenpaket aus Lub-Daten besteht, wobei für den Austausch Folgendes verwendet wird: ein Funkverbindungssteuerungs- (Radio Link Control - RLC) Protokoll und ein Medienzugriffssteuerungs- (Media Access Control - MAC) Protokoll über einen Kanal der physikalischen Schicht des TD-CDMA.

2. Verfahren nach Anspruch 1, das ferner einen Schritt der Konfiguration des Kanals der physikalischen Schicht des TD-CDMA umfasst, damit er stets geöffnet ist.

3. Verfahren nach einem der vorhergehenden Ansprüche, wobei der Schritt des Austauschens des Datenpakets einen HS-DSCH-Transportkanal in einem Übertragungsweg von der mindestens einen Benutzerausrüstung (UE) verwendet.

4. Verfahren nach Anspruch 3, wobei der Schritt des Austauschens des Datenpakets einen E-DCH-Transportkanal in einem Übertragungsweg zu der mindestens einen Benutzerausrüstung (UE) verwendet.

5. Verfahren nach einem der vorhergehenden Ansprüche, wobei der Schritt des Austauschens des Datenpakets einen HS-DSCH-Transportkanal in einem Übertragungsweg zu der mindestens einen Benutzerausrüstung (UE) verwendet.

6. Verfahren nach Anspruch 5, wobei der Schritt des Austauschens des Datenpakets einen E-OCH-Transportkanal in einem Übertragungsweg von der mindestens einen Benutzerausrüstung (UE) verwendet.

7. Verfahren nach einem der vorhergehenden Ansprüche, wobei der Schritt des Austauschens des Datenpakets eine Frequenz der physikalischen Schicht des TD-CDMA verwendet, die sich von dem mindestens einen Frequenzband, das an der Uu-Schnittstelle verwendet wird, unterscheidet.

8. System zum Austausch von Datenpaketen in weiträumigen zellularen Telefonnetzen, wobei das weiträumige zellulare Telefonnetz ein Zugangsnetz aufweist, um durch eine Uu-Schnittstelle zu mindestens einer Benutzervorrichtung (UE) eine Verbindung herzustellen, indem mindestens ein Frequenzband verwendet wird, wobei das System mindestens einen ersten Knoten und mindestens einen zweiten Knoten umfasst, die 3G-Basisstationen sind, die miteinander verbunden werden können, wobei der erste Knoten ein Hubknoten-B (NB_hub) ist, der mit einem Funknetz-Controller (Radio Network Controller - RNC) eine Verbindung herstellen kann, um Lub-Daten auszutauschen, und der zweite Knoten ein Zielknoten-B (NB_target) ist, der mit mindestens einer Benutzerausrüstung (User Equipment - UE) eine Verbindung herstellen kann, **dadurch gekennzeichnet, dass** beide 3G-Basisstationen Datenpakete austauschen können, die aus Lub-Daten bestehen, unter Verwendung eines Protokollstapels, der mindestens eine Transportnetzschicht und mindestens eine physikalische Schicht umfasst, wobei sowohl der mindestens eine erste Knoten als auch der mindestens eine zweite Knoten Folgendes umfassen: eine physikalische Schicht des TD-CDMA, eine Media Access Control (MAC) Protokollschicht und ein Radio Link Control (RLC) Protokoll über die physikalische Schicht des TD-CDMA.

9. System nach Anspruch 8, wobei die physikalische Schicht des TD-CDMA ein Frequenzband verwendet, das sich von dem mindestens einen Frequenzband unterscheidet, das an der Uu-Schnittstelle verwendet wird.

10. System nach einem der Ansprüche 8 oder 9, wobei sowohl der mindestens eine erste Knoten als auch der mindestens eine zweite Knoten ferner eine physikalische Schicht umfassen, die aus Glasfaser, Kupferdraht und Richtfunk ausgewählt wird.

11. System nach einem der Ansprüche 8 bis 10, wobei die physikalische Schicht des TD-CDMA so konfiguriert ist, dass sie einen Kanal verwendet, der dauerhaft geöffnet ist.

12. System nach Anspruch 11, wobei die physikalische Schicht des TD-CDMA einen HS-OSCH-Transportkanal in einem Übertragungsweg von der mindestens einen Benutzerausrüstung (UE) verwendet.

13. System nach Anspruch 12, wobei die physikalische Schicht des TD-CDMA einen E-DCH-Transportkanal in einem Übertragungsweg zu der mindestens einen Benutzerausrüstung (UE) verwendet.

14. System nach einem der Ansprüche 8 bis 11, wobei die physikalische Schicht des TD-CDMA einen HS-OSCH-Transportkanal in einem Übertragungsweg zu der mindestens einen Benutzerausrüstung (UE) verwendet.

15. System nach Anspruch 14, wobei die physikalische Schicht des TD-CDMA einen E-DCH-Transportkanal in einem Übertragungsweg von der mindestens einen Benutzerausrüstung (UE) verwendet.

16. System nach einem der Ansprüche 8 bis 15, wobei die Transportnetzschicht aus einer ATM-basierten Transportnetzschicht und einer IP-basierten Transportnetzschicht ausgewählt wird.

17. System nach einem der Ansprüche 8 bis 16, wobei der Zielknoten-B (NB_target) direkt eine Verbindung zu dem Funknetz-Controller (RNC) herstellen kann.

18. System nach einem der Ansprüche 6 bis 17, das ferner eine Vielzahl von Funknetz-Controllern (RNC) umfasst, die mit den 3G-Basisstationen verbunden sind und ein 3G-Maschennetz bilden.

19. Vorrichtung zum Austausch von Datenpaketen in weiträumigen zellularen Telefonnetzen, die in einer 3G-Basisstation enthalten ist und einen Prozessor umfasst, der Folgendes implementiert: eine physikalische Schicht des TD-CDMA, eine Media Access Control (MAC) -Protokollschicht und eine Radio Link Control (RLC) -Protokollschicht über der physikalischen Schicht des TD-CDMA, wobei der Prozessor so konfiguriert ist, dass er das Verfahren nach einem der Ansprüche 1 bis 8 implementiert.

20. Vorrichtung nach Anspruch 19, **dadurch gekennzeichnet, dass** die Vorrichtung mit einem ATM-Port der 3G-Basisstation verbunden ist.

21. Vorrichtung nach Anspruch 19, **dadurch gekennzeichnet, dass** die Vorrichtung mit einem IP-Port der 3G-Basisstation verbunden ist.

## Revendications

1. Procédé d'échange de paquets de données dans des réseaux téléphoniques cellulaires étendus, le réseau téléphonique cellulaire étendu ayant un réseau d'accès pour la connexion à au moins un équipement utilisateur (UE) par le biais d'une interface Uu utilisant au moins une bande de fréquences, comprenant :
- l'identification d'au moins un premier noeud et d'au moins un second noeud du réseau d'accès, capables de se connecter l'un à l'autre, le premier noeud étant un noeud B concentrateur (NB_hub) capable de se connecter à un contrôleur de réseau radio (RNC) pour échanger des données lub et le second noeud étant un noeud B cible (NB_target) capable de se connecter à au moins un équipement utilisateur (UE) ;
**caractérisé en ce que** le procédé comprend en outre :
- l'échange, en utilisant un protocole de Commande de Liaison Radio (RLC) et un protocole de Commande d'Accès au Support (MAC) sur un canal de la couche physique TD-CDMA, d'au moins un paquet de données du premier noeud au second noeud, l'au moins un paquet de données étant des données lub.

2. Procédé selon la revendication 1, comprenant en outre une étape de configuration du canal de la couche physique TD-CDMA pour qu'il soit toujours ouvert.

3. Procédé selon l'une quelconque des revendications précédentes, dans lequel l'étape d'échange du paquet de données utilise un canal de transport HS-DSCH dans un chemin de transmission depuis l'au moins un équipement utilisateur (UE).

4. Procédé selon la revendication 3, dans lequel l'étape d'échange du paquet de données utilise un canal de transport E-DCH dans un chemin de transmission vers l'au moins un équipement utilisateur (UE).

5. Procédé selon l'une quelconque des revendications précédentes, dans lequel l'étape d'échange du paquet de données utilise un canal de transport HS-DSCH dans un chemin de transmission vers l'au moins un équipement utilisateur (UE).

6. Procédé selon la revendication 5, dans lequel l'étape d'échange du paquet de données utilise un canal de transport E-DCH dans un chemin de transmission depuis l'au moins un équipement utilisateur (UE).

7. Procédé selon l'une quelconque des revendications précédentes, dans lequel l'étape d'échange du paquet de données utilise une fréquence de la couche physique TD-CDMA qui est différente de l'au moins une bande de fréquences utilisée au niveau de l'interface Uu.

8. Système d'échange de paquets de données dans des réseaux téléphoniques cellulaires étendus, le réseau téléphonique cellulaire étendu ayant un réseau d'accès pour la connexion à au moins un équipement utilisateur (UE) par le biais d'une interface Uu utilisant au moins une bande de fréquences, le système comprenant au moins un premier noeud et au moins un second noeud qui sont des stations de base 3G capables de se connecter l'une à l'autre, le premier noeud étant un noeud B concentrateur (NB_hub) capable de se connecter à un contrôleur de réseau radio (RNC) pour échanger des données lub et le second noeud étant un noeud B cible (NB_target) capable de se connecter à au moins un équipement utilisateur (UE), **caractérisé en ce que** les deux stations de base 3G sont capables d'échanger des paquets de données qui sont des données lub en utilisant une pile de protocole qui comprend au moins une couche de réseau de transport et au moins une couche physique, dans lequel les deux de l'au moins un premier noeud et de l'au moins un second noeud comprennent une couche physique TD-CDMA, une couche de protocole de Commande d'Accès au Support (MAC) et un protocole de Commande de Liaison Radio (RLC) sur la couche physique TD-CDMA.

9. Système selon la revendication 8, dans lequel la couche physique TD-CDMA utilise une bande de fréquences différente de l'au moins une bande de fréquences utilisée au niveau de l'interface Uu.

10. Système selon l'une quelconque des revendications 8 ou 9, dans lequel les deux de l'au moins un premier noeud et de l'au moins un second noeud comprennent en outre une couche physique sélectionnée parmi la fibre optique, le fil de cuivre et le faisceau hertzien.

11. Système selon l'une quelconque des revendications 8 à 10, dans lequel la couche physique TD-CDMA est configurée pour utiliser un canal ouvert en permanence.

12. Système selon la revendication 11, dans lequel la couche physique TD-CDMA utilise un canal de transport HS-DSCH dans un chemin de transmission depuis l'au moins un équipement utilisateur (UE).

13. Système selon la revendication 12, dans lequel la couche physique TD-CDMA utilise un canal de transport E-DCH dans un chemin de transmission vers l'au moins un équipement utilisateur (UE).

14. Système selon l'une quelconque des revendications 8 à 11, dans lequel la couche physique TD-CDMA utilise un canal de transport HS-DSCH dans un chemin de transmission vers l'au moins un équipement utilisateur (UE).

15. Système selon la revendication 14, dans lequel la couche physique TD-CDMA utilise un canal de transport E-DCH dans un chemin de transmission depuis l'au moins un équipement utilisateur (UE).

16. Système selon l'une quelconque des revendications 8 à 15, dans lequel la couche de réseau de transport est sélectionnée parmi une couche de réseau de transport ATM et une couche de réseau de transport IP.

17. Système selon l'une quelconque des revendications 8 à 16, dans lequel le Noeud B cible (NB_target) est capable de se connecter directement au contrôleur de réseau radio (RNC).

18. Système selon l'une quelconque des revendications 6 à 17, comprenant en outre une pluralité de contrôleurs de réseau radio (RNC) connectés aux stations de base 3G formant un réseau maillé 3G.

19. Dispositif d'échange de paquets de données dans des réseaux téléphoniques cellulaires étendus incorporé dans une station de base 3G, comprenant un processeur qui met en oeuvre une couche physique TD-CDMA, une couche de protocole de Commande d'Accès au Support (MAC) et une couche de protocole de Commande de Liaison Radio (RLC) sur la couche physique TD-CDMA et configuré pour mettre en oeuvre le procédé défini selon l'une quelconque des revendications 1 à 8.

20. Dispositif selon la revendication 19, **caractérisé en ce que** le dispositif est connecté à un port ATM de la station de base 3G.

21. Dispositif selon la revendication 19, **caractérisé en ce que** le dispositif est connecté à un port IP de la station de base 3G.
